# EUROPEAN PATENT APPLICATION

(11) **EP 4 782 715 A1**
(43) Date of publication of application: **29.07.2026**
(21) Application number: 26153686.6
(22) Date of filing: 23.01.2026
(51) Int. Cl.: F16D 55/226, F16D 65/00

(54) **A DISC BRAKE ASSEMBLY**

(30) Priority: 28.01.2025 US 202519039154
(71) Applicant: ArvinMeritor Technology, LLC, Troy, MI 48084 (US)
(72) Inventor: Leicht, Phillip, South Lyon (US); Philpott, Daniel, Goodrich (US); Polmear, Christopher, Ridgecrest (US)
(74) Representative: Anderson, Nicola Unity

(57) **Abstract**

A disc brake assembly for a heavy commercial vehicle, the disc brake assembly comprising first and second brake pads for contacting a rotor during a braking operation; a brake carrier for receiving at least the first brake pad; a brake housing arranged to slide with respect to the brake carrier; and a removable insert located between the first and second brake pads and configured to separate the first and second brake pads from one another prior to installation of the disc brake assembly on a vehicle; wherein at least one portion of the insert extends to an exterior of the brake housing.

## Description

### Technical Field

The present teachings relate to a disc brake assembly and particularly but not exclusively to an insert for separating brake pads of a disc brake assembly. The present teachings also relate to a method for removing an insert for separating brake pads from a disc brake assembly.

### Background

Disc brakes are commonly used for braking heavy vehicles such as trucks, buses, and coaches. Disc brake assemblies are commonly assembled in isolation, prior to the installation of the disc brake assembly onto a vehicle. It is typical for a disc brake assembly to be produced at a different site to the vehicle, so that transportation of the disc brake assembly to the vehicle will be required following assembly.

A typical disc brake assembly, prior to installation on a vehicle, includes a brake caliper slidably supported on a brake carrier, and opposing brake pads supported in the carrier. Access to the brake pads is gained via an aperture defined by the brake caliper. Upon installation, the disc brake assembly is fitted over a brake rotor and secured to the vehicle axle.

The brake pads oppose one another across a void into which the rotor will ultimately be received. The brake pads are typically held in place in a circumferential direction by the brake carrier, and may be secured in a radial direction by e.g. a pad strap. However, it is possible for the brake pads to move out of position during transportation. This movement could cause difficulty during assembly of the brake over the brake rotor, and/or could cause damage to the brake pads themselves or to other components of the disc brake assembly.

To reduce the likelihood of such damage the brake pads are prevented from moving towards one another by a removable insert or spacer fitted between the brake pads. The insert distances the pads from one another and secures the pads in an axial direction, as well as limiting movement between the brake caliper and the brake carrier.

The insert must be removed from the disc brake assembly upon installation of the assembly onto a vehicle in order for the disc brake to function. Removal of the insert from the brake assembly can be time-consuming. The insert can be difficult to reach and to manipulate. Specialist tools and/or operator training may be required.

It is known for the insert to be pushed out of the brake assembly by the rotor as the disc brake assembly is installed, via the caliper aperture. Following installation of the brake assembly over the rotor, the insert can be removed by an operator if the insert has not been expelled from the disc brake assembly upon installation.

A removable pad shield may be fitted over the caliper aperture following installation of the disc brake assembly on a vehicle. The pad shield is used to inhibit or prevent the ingress of dirt or debris into the disc brake assembly, so as to protect the disc brake assembly whilst the vehicle is in service.

To allow for removal of the insert upon installation of the disc brake assembly, the pad shield cannot be fitted to the disc brake assembly until the disc brake assembly has been installed over the rotor. Fitting the pad shield is time-consuming, and may require removal and re-installation of a pad strap bolt. As well as being time-consuming, fitting the pad shield following disc brake assembly installation increases the risk of debris ingress to the disc brake prior to and during installation.

As the pad shield is fitted after installation of the disc brake assembly, fitting of the pad shield is likely to be carried out by a third party operator. Such a third party operator may have a lesser understanding of the disc brake assembly due to a lower level of training, and could be more likely to cause damage, or to install the shield incorrectly. This can increase the risk of damage to the components of the disc brake and/or the shield itself. For example, there is a risk of disturbing a pad wear warning indicator or pad wear sensors, or a positive pad retraction system, during installation of the shield. Wire nicks or other damage may be caused to a pad wear sensor, for example.

The present teachings seek to alleviate the problems associated with the prior art.

### Summary of Invention

A first aspect of the invention provides a disc brake assembly for a heavy commercial vehicle, the disc brake assembly comprising first and second brake pads for contacting a rotor during a braking operation; a brake carrier for receiving at least the first brake pad; a brake housing arranged to slide with respect to the brake carrier; and a removable insert located between the first and second brake pads and configured to separate the first and second brake pads from one another prior to installation of the disc brake assembly on a vehicle; wherein at least one portion of the insert extends to an exterior of the brake housing.

The insert extending in part to an exterior of the brake housing allows access to the insert for removal from the exterior of the disc brake assembly. The insert can thus be removed from the disc brake assembly, by means of the externally-extending portion, even if there is a pad shield in place. The portion of the insert that extends outside the housing can be grasped by an operator, manually or with an appropriate tool, and can simply and quickly be removed from the disc brake assembly. A pad shield can thus be fitted to the brake assembly prior to installation of the brake assembly on a vehicle. There is a reduced likelihood of the brake pads being damaged during transport and installation, as the pad shield remains in place throughout. There is also a reduced likelihood of the pad shield being incorrectly installed following installation of the brake assembly on the vehicle, as installation can be carried out by the disc brake manufacturers.

Optionally, said portion of the insert may extend between the brake carrier and the brake housing to the exterior of the brake housing.

As well as facilitating removal by enabling easy access to the insert, the insert extending between the carrier and the housing allows the insert to be appropriately positioned between the brake pads. The insert can thus effectively locate the brake pads with respect to one another and the brake carrier, whilst being easy to remove.

Optionally, the brake housing may comprise a bridge configured to extend over a rotor, and said portion may extend between the brake carrier and the bridge to the exterior of the brake housing.

The extension of the portion at the bridge allows the insert to be removed from the disc brake assembly in a substantially tangential direction, and substantially parallel to contact faces of the brake pads. Removal of the insert in this direction allows the insert to be removed in a controlled fashion, i.e. by pulling the insert manually or with a suitable tool.

The first and second brake pads may comprise opposing contact faces, and the insert may be secured between said contact faces in a compression fit.

The insert may be of resilient material.

The insert may be resiliently biased towards the opposing faces.

Advantageously, a simple and effective means of securing the insert in position whilst inhibiting movement of the brake pads is provided. In addition, the means by which the insert is secured allows for easy removal of said insert. That is, relying on a compression fit to secure the insert avoids the need for additional parts such as fasteners that would prolong and complicate removal of the insert.

The disc brake assembly may comprise a removable brake pad shield for shielding the brake pads; wherein the brake pad shield has a fitted position on the brake housing so as to at least partially shield the first and second brake pads; and wherein the insert is configured to be removable from the disc brake assembly whilst the brake pad shield is positioned on the housing in said fitted position.

The brake pad shield can advantageously be fitted prior to removal of the insert, so can be fitted upon assembly of the disc brake assembly. Fitting of the pad shield can therefore be carried out efficiently by trained operators. The disc brake assembly is protected by the pad shield during transportation and installation on a vehicle.

The brake housing may define an aperture, and in said fitted position the brake pad shield may extend at least partially over the aperture.

The brake housing may comprise a bridge configured to extend over a rotor, wherein the bridge may at least partially define the aperture.

The aperture provides access to the brake pads held within the housing, e.g. for pad fitting or replacement. The shield at least partially covers the aperture, in order to protect the disc brake assembly components within the brake housing during assembly and transportation.

An interstice may be defined between the housing and the brake pad shield, and a portion of the insert may extend through the interstice.

The interstice may be defined between the bridge and the brake pad shield.

Advantageously, this arrangement facilitates removal of the insert without disturbing the pad shield, by making it easy for the insert to be grasped by hand or by a tool without affecting the pad shield.

The portion may comprise a tab configured for grasping.

The tab improves ease of manipulation of the insert for removal, either manually or by means of a tool.

The portion may comprise a connection arrangement configured for interaction with a removal apparatus.

The connection arrangement further improves the ease of removal of the insert .

The connection arrangement may comprise an aperture defined by the insert.

An aperture is a simple and effective form of connection arrangement. A hooked tool or a digit can be inserted into the aperture to ease removal of the insert.

The insert may comprise a sheet material.

Advantageously, the insert is relatively thin, which allows it to be extracted through a relatively narrow interstice or gap between components.

The insert may comprise a pliable material, e.g. plastic, e.g. acrylic, e.g. cardboard, etc.

The pliable nature of the insert material allows the insert to be displaced during installation of the disc brake assembly on a vehicle, and to flex when being pulled out of the brake assembly.

The insert may comprise a substantially planar body.

The insert may be compressible in a first direction substantially perpendicular to the plane of the body.

Advantageously, the insert can be relatively expanded when located between the first and second brake pads. In an expanded state the insert can more effectively separate the brake pads from one another. As the insert is removed from the disc brake assembly, it can be compressed, easing removal of the insert from the disc brake assembly. The insert is advantageously able to pass through relatively narrow gaps between components.

The insert may have a compressed state and an expanded state, and the insert may have a thickness of less than 4mm when in the compressed state.

The insert may have a thickness of less than 3mm when in the compressed state.

The insert may have a thickness of less than 4mm.

The insert may have a thickness of less than 3mm.

The insert is relatively thin, so can be removed from a gap between components.

The insert may be substantially rectangular.

Advantageously, the substantially rectangular shape allows for maximum surface contact between the pads and the insert, so that the insert is optimally secured in place between the brake pads whilst being removable in a longitudinal direction.

There is further provided an insert for a disc brake assembly as described above.

There is also provided a method for removing an insert from a disc brake assembly as described above, the method comprising:
a) installing the disc brake assembly on a vehicle; and
b) removing the insert from the disc brake assembly;
wherein step a) precedes step b).

The disc brake assembly may comprise a removable brake pad shield for shielding the brake pads; wherein the brake pad shield has a fitted position on the brake housing so as to at least partially shield the first and second brake pads; the method comprising the step of:
removing the insert from the disc brake assembly whilst the brake pad shield is in the fitted position.

### Brief Description of Drawings

Embodiments will now be described, by way of example only, with reference to the accompanying Figures, in which:
Figure 1 is an isometric view of a disc brake assembly according to the present teaching, with an insert;
Figure 2 is a cross-sectional view along the line A-A through the disc brake assembly of Figure 1;
Figure 3 is a partial isometric view of an insert and brake pads of the brake assembly of Figures 1 and 2;
Figure 4 is a cross-sectional view along the line A-A through the disc brake assembly of Figures 1 and 2, including a brake rotor;
Figure 5A is a plan view of an insert for the brake assembly of Figures 1 to 3;
Figure 5B is a plan view of a second embodiment of an insert for the brake assembly of Figures 1 to 3;
Figure 5C is a plan view of a third embodiment of an insert for the brake assembly of Figures 1 to 3;
Figure 6 is an isometric view of a disc brake assembly with an insert according to a further embodiment of the present teachings in a first, fitted position;
Figure 7 is an isometric view of the disc brake assembly of Figure 6 with a pad shield removed; and
Figure 8 is an isometric view of the disc brake assembly of Figure 7, with the insert in a second, partially removed, position.

### Detailed Description

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

Reference to "vertical" and "horizontal" in the present disclosure should be understood to be in relation to the disc brake assembly when mounted on a heavy vehicle on horizontal ground, and unloaded. The term "axial" is generally used in relation to the axis of rotation of the rotor over which the disc brake assembly would sit. The term "radially" is generally used in relation to the circumference of the rotor over which the disc brake assembly would sit.

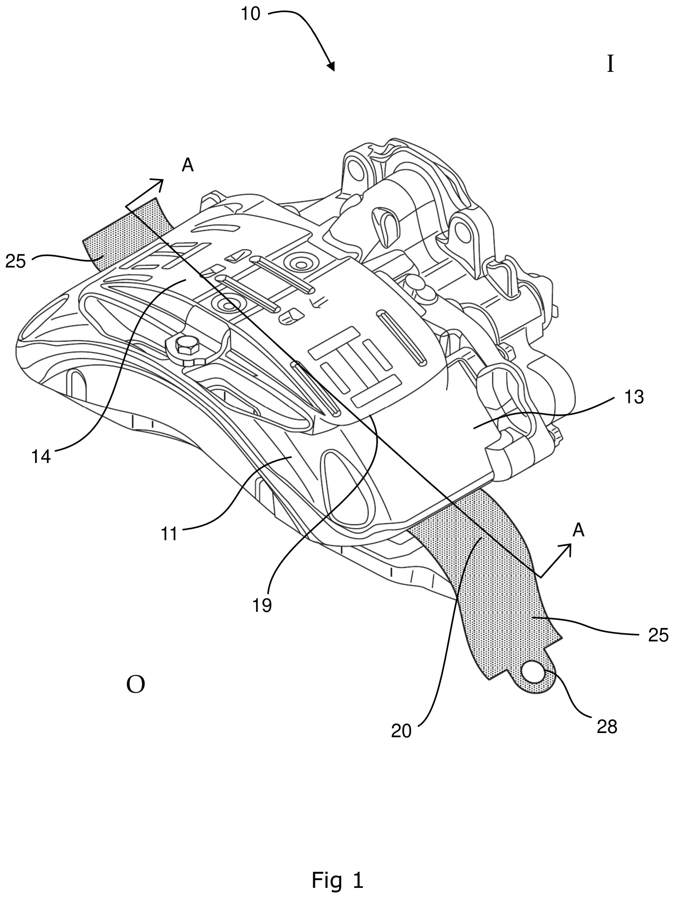

Figure 1 depicts an embodiment of a disc brake assembly 10 of a type utilised for heavy vehicles such as trucks, buses and coaches.

Various orientations of the disc brake assembly are described. In particular the directions inboard I and outboard O refer to the typical orientation of the disc brake when fitted to a vehicle and with reference to the longitudinal centre line of the vehicle. Reference to the exterior of the housing in the present disclosure should be understood to refer to the space outside of the brake assembly 10, and/or outside an external surface of the housing.

With reference to Figures 1, 2, 3 and 4, the disc brake assembly 10 has a caliper 11 slidably mounted with respect to a brake carrier 12 by two guide assemblies (not shown). The caliper includes a brake housing 11 typically formed from cast iron or steel. The brake carrier 12 is typically formed from cast iron or steel.

The brake carrier 12 carries an inboard brake pad 16 and an outboard brake pad 18, located radially by abutments (not shown) defined by the brake carrier 12. The caliper housing 11 defines a cavity 15 within which the brake pads 16, 18 are housed. The housing defines an aperture 17. The aperture 17 provides access to the cavity 15, e.g. for brake pad fitting or replacement.

The disc brake assembly 10 includes a removable spacer or insert 20. The removable insert 20 extends within the cavity 15 between the first brake pad 16 and the second brake pad 18. The removable insert 20 restricts movement of the first 16 and second 18 brake pads towards one another and with respect to the brake carrier abutments prior to installation of the disc brake assembly 10 on a vehicle (not shown). The insert 20 typically advantageously restricts relative movement of the caliper 11 with respect to the brake carrier 12.

In this embodiment, at least one portion 25 of the insert 20 extends to the exterior of the disc brake assembly 10. That is, the portion 25 extends beyond the exterior of the brake housing 11. The portion 25 extending beyond the brake housing 11 facilitates removal of the insert 20 from the disc brake assembly 10, as the operator can access the insert 20 without penetrating or dismantling the disc brake assembly 10.

In this embodiment, the insert 20 extends from the disc brake assembly 10 in two locations. The skilled person would understand that the insert 20 could extend from more than or fewer than two locations in alternative embodiments.

The disc brake assembly 10 includes a pad shield 14. The pad shield 14 inhibits the ingress of foreign material into the cavity 15.

Upon installation of the disc brake assembly 10 onto a vehicle the insert 20 is no longer required, and must be removed from the disc brake assembly 10. As the insert 20 extends to an exterior of the brake housing 11, the insert 20 is removable from the cavity 15 of the disc brake assembly 10 without the need for access to the cavity 15. The insert 20 can thus be removed without removing the pad shield 14 from the disc brake assembly 10.

Advantageously, the disc brake assembly 10 can be installed on a vehicle without the need to remove or displace the pad shield 14. Installation of the disc brake assembly 10 can thus be carried out more quickly and efficiently. As there is no need for handling of the shield 14 by a potentially untrained operator, there is a reduced likelihood of the pad shield 14 being damaged in the process of removing the pad shield 14 from a fitted position on the brake housing 11, and re-installing the pad shield 14 in the fitted position after removing the insert 20. A pad wear warning indicator, pad wear sensors or a positive pad retraction system can be installed prior to installation of the disc brake assembly on a vehicle without the risk of complicating later installation of the pad shield 14.

In this embodiment, the portion 25 extends to the exterior of the brake housing 11 between the brake carrier 12 and the brake housing 11. The arrangement of the components of the disc brake assembly 10 is such that it is convenient for the insert 20, positioned as it is between the brake pads 16, 18, to extend to the exterior of the brake housing 11 between the brake carrier 12 and the brake housing 11.

The disc brake assembly 10 of this embodiment has an interstice 30 between the brake housing 11 and the brake carrier 12 through which the insert 20 extends, such that the portion 25 extends beyond the exterior of the brake housing 11.

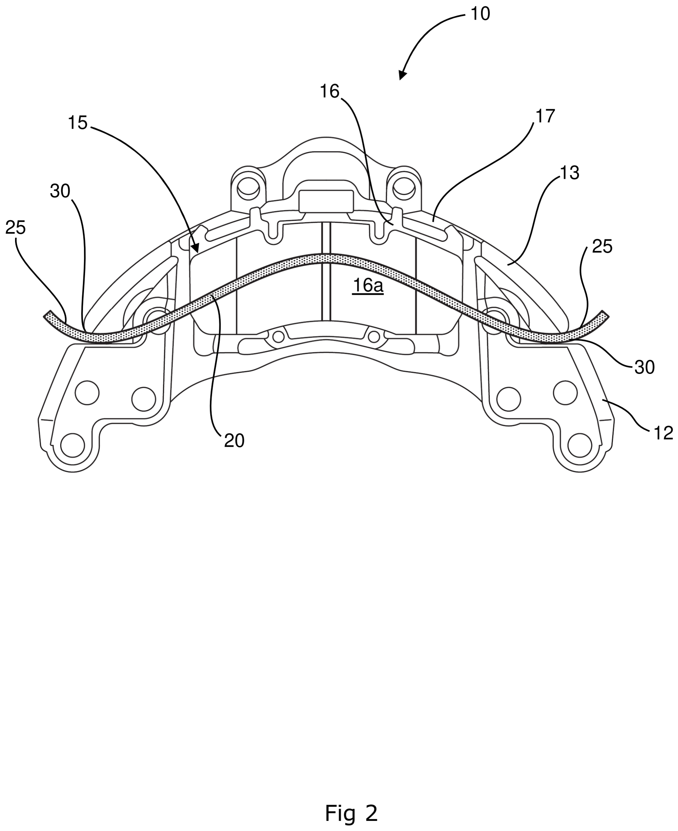

As shown in Figures 1 and 2, the brake housing 11 includes a bridge 13 which extends across the rotor 4 when the disc brake assembly 10 is installed on a vehicle. The bridge 13 at least partially defines the aperture 17 that provides access to the cavity 15.

In this embodiment, the interstice 30 is between the bridge 13 and the brake carrier 12. In this embodiment, there is an interstice 30 at two locations between the bridge 13 and the brake carrier 12, at opposing radial ends of the brake carrier 12. The insert 20 of this embodiment extends through both interstices 30, such that two portions 25 extend to the exterior of the brake housing 11.

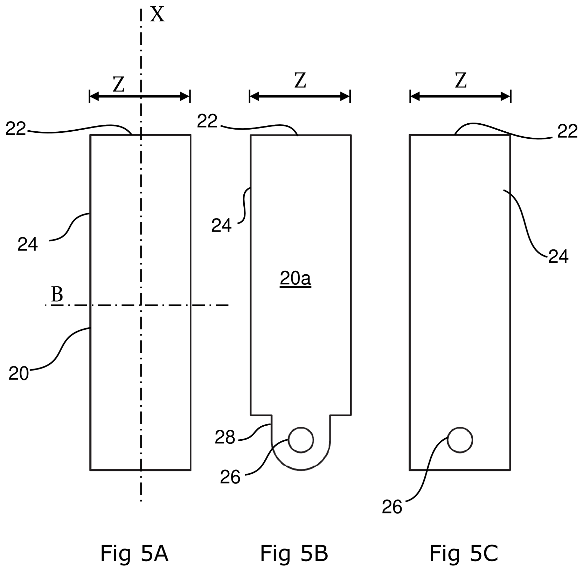

The insert 20 extending to the exterior of the brake housing 11 at an interstice 30 adjacent the bridge 13 advantageously facilitates the removal of the insert 20 via pulling substantially parallel to a longitudinal axis X of the insert 20 (see Figure 5A). Removal of the insert 20 in this direction, i.e. in a substantially tangential direction, advantageously allows controlled removal of the insert 20 under a consistent force.

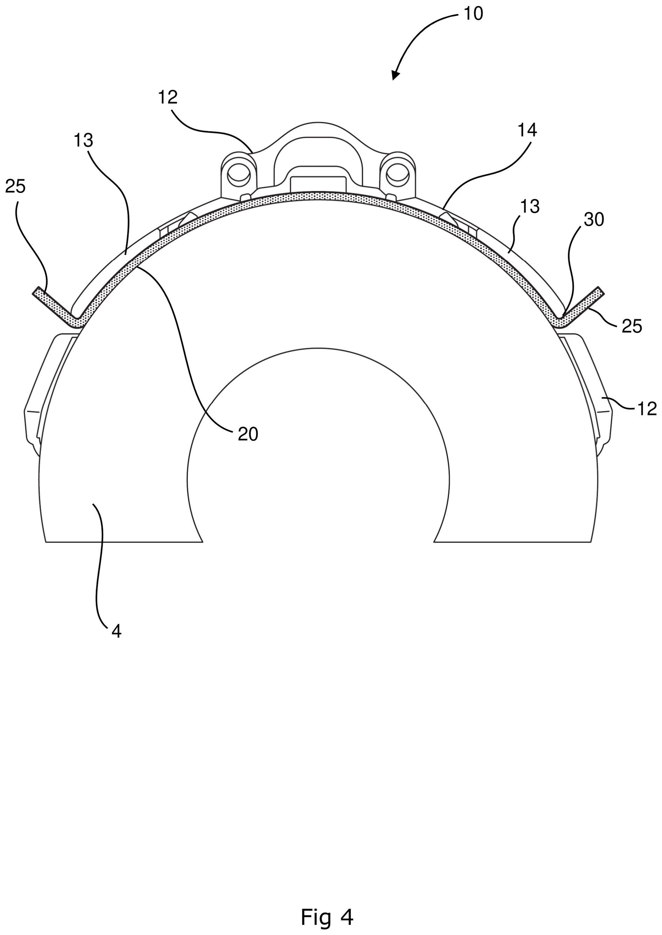

The first brake pad 16 has a first contact face 16a. The second brake pad 18 has a second contact face 18a. The first 16a and second 18a contact faces oppose one another. The first 16a and second 18a contact faces are configured to oppose one another either side of a rotor 4 (see Figure 4) once the disc brake assembly 10 is installed on a vehicle.

Prior to installation of the disc brake assembly 10 on a vehicle, the insert 20 is held between, and supported in position by, the first 16a and second 18a contact faces. In this embodiment, the insert 20 is secured between the opposing faces in a compression fit. That is, the dimensions of the insert 20 are such that the insert 20 must be compressed in an axial direction to fit between the brake pads 16, 18.

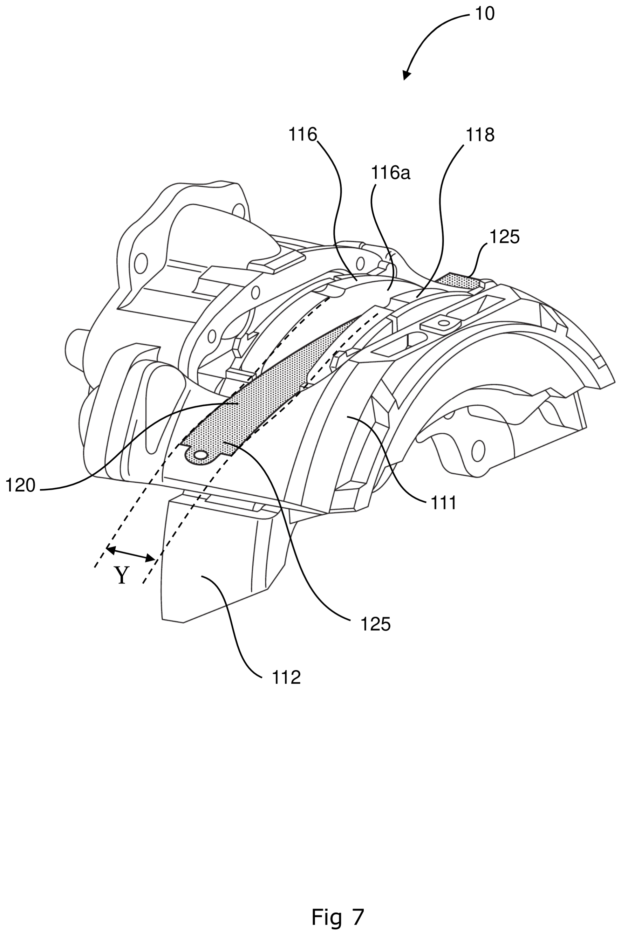

The distance between the contact faces 16a, 18a of the brake pads 16, 18 in an axial direction is shown at Y in Figure 7. The width Z of the insert 20 (see Figures 5A, 5B, 5C) is slightly greater than distance Y. The difference between Z and Y is sufficient for the insert 20 to be held in a compression fit between the contact faces 16a, 18a. The width Z thus depends on the thickness of the brake rotor. In this embodiment, the distance Y is in the range of 41mm to 45mm. In alternative embodiments, the distance Y is some other suitable distance, e.g. a greater or lesser distance, depending on the size of the brake assembly and in particular on the thickness of the brake rotor. The distance Y is equal to the thickness of the rotor 4 plus the required running clearance between the rotor 4 and each contact face 16a, 18a.

The width Z of the insert 20 is in this embodiment in the range 41mm to 51mm. Such a width Z enables a compression fit between the insert 20 and the brake pads 16, 18.

Such an insert 20 allows space for features such as a pad wear warning indicator or positive pad retraction arrangement (not shown) on the disc brake assembly 10.

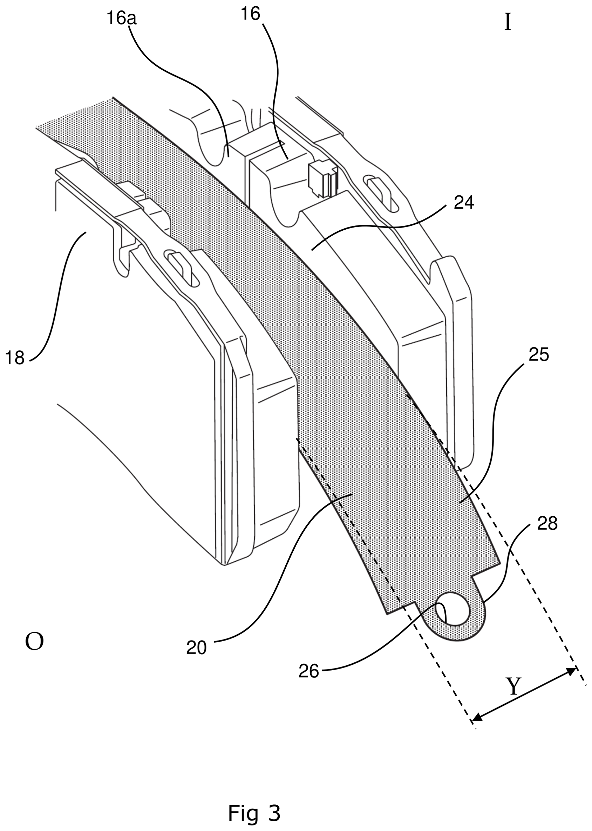

In Figure 3, it can be seen that a first longitudinal edge 24 of the insert 20 is in contact with the first brake pad 16, and a second longitudinal edge 24 of the insert 20 is in contact with the second brake pad 18.

In this embodiment, the disc brake assembly 10 is shown in a "shipping condition". That is, the pistons (not shown) by which the brake pads 16, 18 are applied to the rotor 4 are in a fully retracted position, such that running clearance is maximised. Ease of installation of the disc brake assembly 10 over the rotor 4 is thus improved.

The compression force keeps the insert 20 in place between the brake pads 16, 18 whilst a reciprocal force on the brake pads 16, 18 acts to hold the brake pads 16, 18 axially in position. The compression force is such that it can easily be overcome by an operator when removing the insert 20 from the disc brake assembly 10. Such an arrangement is a simple and effective means of securing the insert 20 within the disc brake assembly 10 in a removable fashion.

In this embodiment, the insert 20 is resilient. That is, the material and the shape of the insert 20 are such that the insert 20 can act as a spring when compressed between the first and second brake pads 16, 18 in an axial direction. The resilience of the insert 20 improves location of the insert 20 in relation to the brake pads 16, 18 whilst retaining ease of removal.

The pad shield 14 is located on the brake housing 11 in a fitted position, in which the pad shield 14 at least partially covers the aperture 17. In this embodiment, the pad shield 14 substantially covers the aperture 17.

The insert 20 of Figures 1 to 4 has a tab 28 on each portion 25 of the insert 20 that extends external to the disc brake assembly 10. The tab 28 may be of any shape which is convenient for removing the insert 20. For example, the tab 28 is narrower than a substantially planar body 20a of the insert 20. As shown in Figure 5B, the tab 28 may be rounded.

As shown in Figure 5B, the insert 20 of one embodiment has a connection arrangement 26 to aid in the removal of the insert 20. The connection arrangement 26 may be on any part of the portion 25 of the insert 20 which extends externally to the disc brake assembly 10. The connection arrangement 26 may be configured in any way which aids the removal of the insert 20. For example, the connection arrangement may be specifically designed to engage a particular tool, or the digit of an operator.

The skilled person will understand that although Figure 1 shows an insert 20 extending from two locations, but having only one connection arrangement 26, a connection arrangement could be implemented at any or every location on the insert 20 which extends from the disc brake assembly 10.

As shown in Figures 5B and 5C, in these embodiments the connection arrangement of the insert 20 is in the form of an aperture 26 that may receive a tool or the digit of an operator intended to ease the removal of the insert 20. Although in the illustrated embodiments the aperture is substantially circular, the aperture 26 of these or alternative embodiments could be of any suitable shape. In the embodiment of Figure 5C, the insert 20 does not have a tab 28. The skilled person would understand that the tab 28 and the aperture 26 are independent features and may be applied in any combination.

The insert 20 of these embodiments is manufactured from a sheet material. Use of a sheet material advantageously allows simultaneous production of a high number of inserts 20 from a single sheet of material, e.g. by stamping. The required constant thickness of the insert 20 (see below) lends itself to being manufactured from a sheet material, for example, in a cutting or stamping process.

In the embodiment shown, the insert 20 is made of a flexible material such as plastic (for example PPE, LDPE, HDPE, acrylic or any other suitable plastic). In alternative embodiments the insert can be made from cardboard or paperboard, or laminated board, or any other suitable material.

In this embodiment, the insert 20 is flexible or pliable in order to ease the removal of the insert 20 from the disc brake assembly 10. The insert 20 of this embodiment maintains some rigidity, in order to hold the pads 16, 18 in place, whilst retaining the ability to be flexed during removal from the disc brake assembly 10.

Figures 5A, 5B and 5C show alternative inserts 20 of different shapes, according to different embodiments.

Figure 5A shows an insert 20 with ends 22 which extend from the first contact face 16a of the first brake pad 16 to the second contact face 18a of the second brake pad 18. The plane of the insert 20 may extend generally perpendicular to the first 16a and second 18a contact faces of the first 16 and second 18 brake pads. This reduces the risk of the insert 20 slipping from between the first 16a and second 18a contact faces.

The insert 20 is substantially rectangular, having a substantially planar body 20a. The body 20a is substantially planar when the insert 20 is not deformed, i.e. when the insert 20 is not flexed into some other shape. The corners at which the longitudinal edges and ends 22 meet may be curved, tapered, or any other desirable shape. An insert 20 with right angle corners is easier to manufacture and produces less waste material. An insert with curved or tapered edges will reduce the chance of the insert snagging whilst being removed.

The insert 20 according to the first embodiment is substantially thin. For example, the insert 20 is less than 4mm thick, or less than 3mm thick, or less than 2mm thick. Although the embodiment shown has a thickness considerably less than 2mm, it would be understood that any thickness of insert could be used, so long as there is a suitably sized space via which the insert can extend out of the disc brake assembly 10. The inserts of Figures 5A, 5B, and 5C are of substantially constant thickness.

In some embodiments (not shown), the insert 20 is of compressible thickness. That is, the insert 20 is compressible in a direction substantially transverse or substantially perpendicular to the plane defined by the planar body 20a. Advantageously, the insert being compressible allows increased strength in the direction of a transverse axis B (see Figure 5A), yet can be compressed to ease removal of the insert 20 from the disc brake assembly.

In one embodiment, the insert 20 is of compressible material. In an alternative embodiment, the insert 20 is of a compressible construction, e.g. a honeycomb construction or a corrugated construction. In such an embodiment, the insert 20 may be of a suitable material such as board, for example, corrugated cardboard.

In one embodiment, the insert 20 has a compressed state and an expanded state. In the compressed state, the insert has a thickness of less than 4mm, or less than 3mm, or less than 2mm.

As shown in Figure 4, upon installation of the disc brake assembly 10 over a rotor 4, the rotor 4 pushes the insert 20 upwards. Typically, a clearance of 2 to 4mm is provided between the rotor 4 and the housing 12, in which the insert 20 sits following installation. The flexible nature of the insert 20 allows the insert 20 to be deformed such that the disc brake assembly 10 can be installed over the rotor 4.

As shown in Figure 4, the portions 25 remain in position following installation, extending outside the housing 12. Upon installation of the disc brake assembly 10, the insert 20 of any embodiment described herein is removed by gripping one of the portions 25. The insert is gripped by either an operator, or a tool, and pulled radially away from the disc brake assembly 10. The insert 20 will then travel through the brake housing 11 to be removed from the disc brake assembly 10.

Alternatively, the insert 20 may be removed prior to the installation of the disc brake assembly 20 over a rotor 4.

In contrast to the state of the art, there is no requirement to remove the pad shield 14 from the fitted position when removing the insert 20. Advantageously, therefore, the pad shield 14 can be fitted to the disc brake assembly 10 prior to transportation of the disc brake assembly. The components of the disc brake assembly 10 are thus protected by the pad shield 14 during transportation and installation of the disc brake assembly 10.

Following removal of the insert 20 from the disc brake assembly 10, the insert 20 can be returned to the brake manufacturers for re-use.

The skilled person would understand that the operator benefits from the choice of removing the insert 20 prior to, or after, the installation of the disc brake assembly 10 on to the rotor 4. The operator can select the method which best suits their skills, requirements, and equipment.

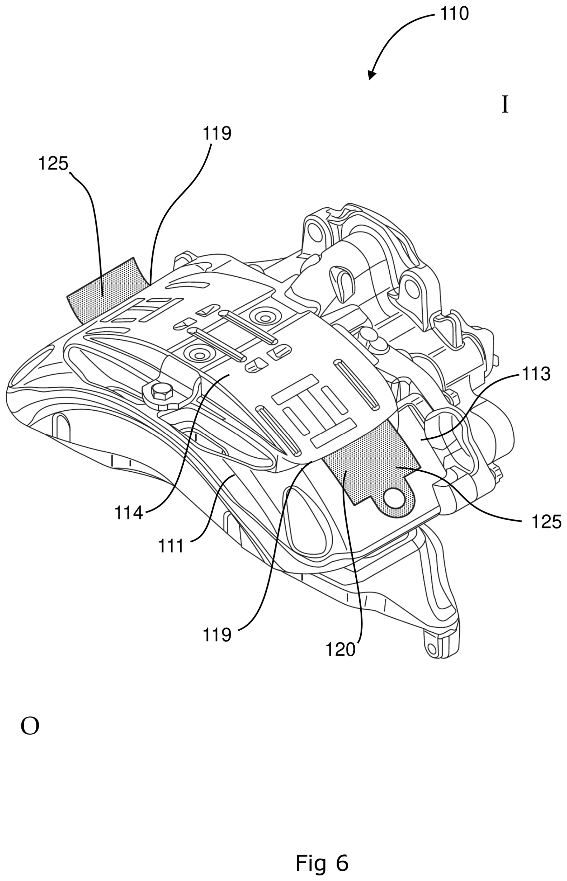

With reference now to Figures 6 to 8, there is disclosed a further embodiment. Only those features different to the first embodiment are discussed in detail. Corresponding reference numbers to those of the previous embodiment have been used, with the addition of a preceding "1".

In this embodiment, an interstice 119 is defined between the brake housing 111 and the pad shield 114. The insert 120 extends through the interstice 119 such that the portion 125 extends beyond the exterior of the brake housing 111. In this embodiment, there is an interstice 119 at each radial end of the pad shield 114. This is a beneficial location from which the insert 120 can extend, as it is located close to the cavity 115, and therefore reduces the required length of the insert 120. The amount of material used and the weight of the insert 120 is thus advantageously reduced.

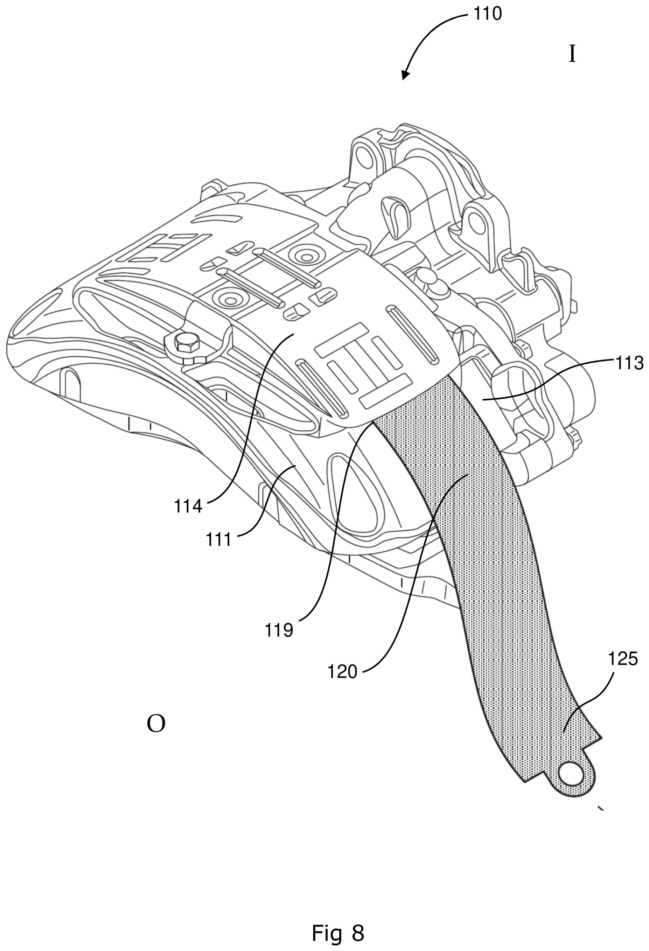

As shown in Figure 8, the insert 120 is removable by pulling through the interstice 119. As in the previous embodiment, the insert 120 can be removed whilst the pad shield 114 is in place, thus allowing installation of the pad shield 114 onto the disc brake assembly 110 prior to installation of the disc brake assembly on to a vehicle.

It will be understood by the skilled person that although only two examples have been given, there are alternative locations from which the insert 120 could extend from the cavity 115 of the disc brake assembly 110 to the exterior of the disc brake assembly 110.

The one or more embodiments are described above by way of example only and it will be appreciated that the variations are possible without departing from the scope of protection afforded by the appended claims.

## Claims

1. A disc brake assembly for a heavy commercial vehicle, the disc brake assembly comprising:
first and second brake pads for contacting a rotor during a braking operation;
a brake carrier for receiving at least the first brake pad;
a brake housing arranged to slide with respect to the brake carrier; and
a removable insert located between the first and second brake pads and configured to separate the first and second brake pads from one another prior to installation of the disc brake assembly on a vehicle;
wherein at least one portion of the insert extends to an exterior of the brake housing.

2. The disc brake assembly of claim 1, wherein said portion of the insert extends between the brake carrier and the brake housing to the exterior of the brake housing.

3. The disc brake assembly of claim 2, wherein the brake housing comprises a bridge configured to extend over a rotor, and wherein said portion extends between the brake carrier and the bridge to the exterior of the brake housing.

4. The disc brake assembly of any of claims 1 to 3 wherein the first and second brake pads comprise opposing contact faces, and wherein the insert is secured between said contact faces in a compression fit; preferably wherein the insert is of resilient material, and wherein the insert is resiliently biased towards the opposing faces.

5. The disc brake assembly according to any preceding claim, further comprising a removable brake pad shield for shielding the brake pads; wherein the brake pad shield has a fitted position on the brake housing so as to at least partially shield the first and second brake pads; and wherein the insert is configured to be removable from the disc brake assembly whilst the brake pad shield is positioned on the housing in said fitted position; preferably wherein the brake housing defines an aperture, and wherein in said fitted position the brake pad shield extends at least partially over the aperture; optionally wherein the brake housing comprises a bridge configured to extend over a rotor, wherein the bridge at least partially defines the aperture.

6. The disc brake assembly according to claim 5, wherein an interstice is defined between the housing and the brake pad shield, and wherein a portion of the insert extends through the interstice; optionally wherein the interstice is defined between the bridge and the brake pad shield.

7. The disc brake assembly according to any preceding claim, wherein the portion comprises a tab configured for grasping.

8. The disc brake assembly according to any preceding claim, wherein the portion comprises a connection arrangement configured for interaction with a removal apparatus; preferably wherein the connection arrangement comprises an aperture defined by the insert.

9. The disc brake assembly of any preceding claim wherein the insert comprises a sheet material.

10. The disc brake assembly of any preceding claim wherein the insert comprises a pliable material, e.g. plastic, e.g. acrylic, e.g. cardboard, etc.

11. The disc brake assembly of any preceding claim, wherein the insert comprises a substantially planar body, and wherein the insert is compressible in a first direction substantially perpendicular to the plane of the body; preferably wherein the insert has a compressed state and an expanded state, and wherein the insert has a thickness of less than 4mm when in the compressed state, optionally wherein the insert has a thickness of less than 3mm when in the compressed state.

12. The disc brake assembly of any one of claims 1 to 10 wherein the insert has a thickness of less than 4mm, optionally wherein the insert has a thickness of less than 3mm.

13. The disc brake assembly of any preceding claim wherein the insert is substantially rectangular.

14. A removable insert for a disc brake assembly according to any preceding claim.

15. A method for removing an insert from a disc brake assembly according to any one of claims 1 to 18, the method comprising:
installing the disc brake assembly on a vehicle; and
removing the insert from the disc brake assembly;
wherein step a) precedes step b);
preferably wherein the disc brake assembly comprises a removable brake pad shield for shielding the brake pads; wherein the brake pad shield has a fitted position on the brake housing so as to at least partially shield the first and second brake pads; the method comprising the step of:
removing the insert from the disc brake assembly whilst the brake pad shield is in the fitted position.
